## Europäisches Patentamt
## European Patent Office
## Office européen des brevets

(19)

(11) Publication number: **0 063 845**
A1

(12) **EUROPEAN PATENT APPLICATION**

(21) Application number: 82200460.2

(22) Date of filing: 15.04.82

(51) Int. Cl.³: **B 65 B 11/04,** B 65 B 25/06
// B65C9/28, B65C5/00

(30) Priority: 21.04.81 NL 8101941

(71) Applicant: **Technisch Ontwikkelingsbureau van Elten B.V.,** Baron van Nagellstraat 174, NL-3700 AA Barneveld (NL)

(43) Date of publication of application: **03.11.82**
**Bulletin 82/44**

(72) Inventor: **Benda, Wim,** Noordersingel 54, NL-3781 XK Voorthuizen (NL)

(84) Designated Contracting States: **AT BE CH DE FR GB IT LI NL SE**

(74) Representative: **Kooy, Leendert Willem et al,** Octrooibureau Vriesendorp & Gaade Dr. Kuyperstraat 6, NL-2514 BB The Hague (NL)

(54) **A binding machine for cheeses, particularly round cheeses.**

(57) This invention relates to a method and apparatus for applying a binding around the periphery of round flat cheeses or similar objects from rolls of binding.

According to the method of the invention the unrolled binding (51) is taken over from the supply roll (50) by a perforated wall of a vacuum chamber (40), after which said binding is transferred onto an adjacent rotating cheese (1).

The apparatus is provided with a device (11) to support and rotate the cheeses and with a stock of binding material.

According to the invention at the same level as the center of the cheese on the support device (11) there is disposed a drivable drum (22), the wall of which is provided with openings (23) and with the aid of partitions two chambers are formed in the drum, one chamber (40) thereof being connected to a vacuum source (44) and the other chamber (39) being connected to an overpressure source (42), the overpressure chamber being provided at the side of the cheese.

-1-

A BINDING MACHINE FOR CHEESES, PARTICULARLY ROUND CHEESES.

The present invention relates to an apparatus for applying a binding around a round article, provided with a turntable to support and drive the article and a stock of binding material.

It happens more often nowadays that before being delivered to the retail tradesman the exterior of the cheeses is provided with a paper tape. These tapes are printed and may give information with respect to the brand, type, age, quality and the like of the respective cheese. Each cheese producer has his own embodiments.

In the known apparatus for applying a binding around a cheese one proceeds as follows. The cheeses are preliminarily moistened with water with the aid of a wet sponge or manually operated atomizer. By the influence of the moist the synthetic material, or other material with which the cheese is wrapped, is somewhat dissolved, so that the exterior of the cheese becomes weak and sticky. It is also done, that the tape is applied directly after greasing with the plastic emulsion, so that the tape sticks to the cheese. For that purpose the cheese is placed on a turntable and manually rotated. In the somewhat more mechanized embodiments of said apparatus the turntable is driven by means of an electro-motor. Then from a reel with binding material a piece of the correct length is torn off and one end thereof is manually pushed at the correct place against the cheese. Because of the rotation of the cheese the remaining piece of the tape is also wound around the cheese. When doing so the tape has to be manually controlled additionally. After the complete tape has been wound around the cheese the tape is smoothened, if necessary, with a moisty sponge or the like. Then the cheese is removed from the turntable, and discharged.

With certain types of cheese it is necessary to wrap the cheese with a binding directly after it has left the brine bath. Said binding need not be made of paper, but could be made of textile, and shows resemblance with coarse aseptic gauze. Said binding acts as a kind of corset and should take care that during the aging process on the board the cheese remains in good shape and does not sag. The application of said bindings takes place in a similar way as described above for the paper tapes. One does, however use as adhesive instead of a synthetic emulsion also a kind of wall paper glue, with which the periphery of the cheese is first greased and, after wrapping the binding, it is smoothened.

It appears from the above, that the application of a binding around a cheese or similar round article is cumbrous and tiresome, and moreover it does not meet the demands, set in the hygienic field. Attemps as to mechanisation have failed up to now, as the binding is very light and vulnerable and mechanical devices can no longer manipulate the binding as soon as they have contacted the cheese, i.e. the adhesives, by which they are fouled.

The present invention tends to abolish the disadvantages of the above described known method and apparatus.

This object is achieved in that according to the invention at the same level as the article on the turntable a drivable cylindrical drum is disposed, the cylinder wall of which is provided with openings, in that in the drum a cylindrical space is formed by two vertically spaced plates, not rotating with the drum, and in that the cylindrical space is divided by walls into at least two chambers, one of said chambers being connected to a vacuum source and the other chamber being connected to an overpressure source, the overpressure chamber being provided at the side of the article.

By applying said feature it is achieved that the binding to be applied is carried along on the drum wall, which is provided with openings, because of the underpressure in the vacuum chamber, and at the location of the overpressure chamber it is blown against the article, after which the binding is carried along by the article, which is driven by the turntable, and is wound around the article. With the apparatus according to the invention the binding can be applied quickly, easily and hygienically around the article, and the achieved hygiene is especially important when applying a binding around a cheese or another edible article.

In a preferred embodiment of the apparatus according to the present invention in the cylindrical space a third chamber is formed by means of another wall, which chamber communicates with the atmosphere and which is arranged behind the overpressure chamber seen in the direction of rotation of the drum.

Owing to said neutral chamber or sector in the cylindrical space, it is achieved that the overpressure in the overpressure chamber cannot be partially nullified by the vacuum chamber, directly following the overpressure chamber without neutral chamber, whereas the binding, after being blown from the drum, can no longer come under the influence of the underpressure of the vacuum chamber.

This solution has as a consequence that the mechanical binding supply device does not come into direct contact with the cheese or the adhesive and thereby it is not fouled so that a reliable and automatic operation has become possible.

The invention also relates to a method for applying a binding from rolls of binding around the periphery of round flat cheeses.

According to the invention the unrolled binding is taken over from the supply roll by a perforated wall of a vacuum chamber, after which said binding is transferred onto an adjacent rotating cheese.

The invention is further elucidated by way of a few embodiments, represented in the drawings.

Fig. 1 is a schematic top view of the apparatus with a partial cross-section according to the line I-I in fig. 2,
fig. 2 is a cross-section according to the line II-II in fig. 1,
fig. 3 is a cross-section according to the line III-III in fig. 1,
fig. 4 is a cross-section according to the line IV-IV in fig. 1,
fig. 5 is a cross-section according to the line V-V in fig. 4 and
fig. 6 is a schematic plan view of another embodiment of the apparatus according to the invention.
Fig. 7 is a schematic plan view of still another embodiment of the apparatus according to the invention.

The apparatus according to the invention will be described by way of an embodiment of a machine for applying a binding around cheeses. It goes without saying that also other articles then cheeses can be provided with the binding with the apparatus according to the invention. As indicated above, said binding may consist of a type of gauze, but for the binding also other materials could be used, for instance synthetic material.

In the drawn embodiment of the apparatus according to the invention a belt conveyor 2 is provided to supply the cheeses 1, said conveyor being mounted on a frame 3 and which is driven by a motor 4. Near the discharge end of the belt conveyor 2 freely rotatable centering wheels 5 are mounted on both sides, which accurately center the cheeses 1 in the middle of the belt conveyor 2.

Aligned with the belt conveyor a double V-belt conveyor 6 is disposed, which is mounted on a frame 7 and which can be driven by a motor 8. On the frame 7 of the machine is also pivotably mounted an upwardly and downwardly movable stop 9, which serves to hold the cheeses 1 in a certain position on the V-belts 6. The stop 9 is controllable with the aid of a hydraulic or pneumatic cylinder 10, such, that in its uppermost position the stop 9 extends above the V-belts 6 and in its lowermost position it is below the V-belts 6.

Furthermore in the frame 7 a turntable 11 is mounted. which can be driven by a motor 12. The assembly of turntable 11 and motor 12 can be mounted upwardly and downwardly movable in the frame 7, by means of hinge bars 13, and is operable by means of a hydraulic or pneumatic cylinder 14 such, that in its uppermost position, illustrated in dash-dotted lines, the turntable 11 is above the V-belts 6 and in its lowermost position, which is illustrated in full lines, it is below the upper plane of the V-belts 6.

Adjoining to the V-belt conveyor 6 a discharge conveyor 15 for the cheeses 1, which is mounted on a frame 16.

In fig. 3 the frames 3, 7 and 16 are illustrated as individual frames, but said three frames may also be combined into one common frame of the machine.

Seen in the direction of conveyance at the right-hand side of the V-belt conveyor 6 a pivotally mounted brush 17 is arranged on a clip 18 on the frame 7 of the machine, said brush being connected to the clip 18 by means of a tension spring 21, such that the brush hairs are springingly pushed against a cheese 1, which is on the turntable 11.

For the supply and discharge of the cheeses it is also possible to use a roundabout on which for instance for a higher production various turntables are mounted, or to use a plurality of rotation and support devices for the cheeses, said devices being aligned behind or juxtaposed to each other, instead of the above described conveyors 2, 6 and 15.

With the above described arrangement, seen in direction of conveyance, downstream of the clip 18, so at the side of the discharge conveyor 15, a spray nozzle 18 is mounted on the frame 17 of the machine, said spray nozzle 19 being adapted to spray water or another liquid against the peripheral surface of the cheese 1 on the turntable 11 and which spray nozzle is operable   by a magnet valve 20.

The liquid and adhesive respectively, can also be sprayed directly on or into the brush, and can be applied to the cheese through the brush.

Seen in the direction of conveyance at the left side of the V-belt conveyor 6 a vertical driving axis 19 is mounted in a bearing 29. On the upper end of the driving axis 19 a drum 22 is secured, the cylindrical peripheral wall of which is provided with one or more series of perforations or bores 23. The assembly 19 and 22 of the drum is drivable by means of a motor 24, with which on the motor shaft a friction pinion 25 is secured, which is in engagement with a friction wheel 26 on the driven shaft 19. The friction pinion 25 is held in engagement with the friction wheel 26 by means of a tension spring 27 which engages a tiltable motor seat 28, which is

0063845

-7-

pivotally mounted on the machine frame 7.

Furthermore on the frame 7 of the machine two columns 30 are provided. On the upper ends of the columns a yoke 31 is mounted from which by means of mounting cams 32 a cylindrical stator 33 is suspended. The cylindrical stator 33 consists of an upper plate 34 and a lower plate 35, spaced therebelow, said upper plate 34 and lower plate 35 being fixedly connected by means of two partitions 36 and 37. The upper plate 34 and lower plate 35 define a cylindrical space 38, which is divided by means of the two partitions 36 and 37 into two chambers 39 and 40. The diameter of the upper wall 34 and the lower wall 35 of the stator 33 is somewhat smaller than the inner diameter of the drum 22, the outer diameter of which at its turn is the same as, or somewhat greater, than the outer diameter of the cheese 1 to be wrapped.

The chamber 39 is connected by means of a conduit 41 to an overpressure source 42, for instance the pressure side of a fan, whereas the chamber 40 is connected by means of a conduit 43 to the suction side of an underpressure source 44, which could for instance also consist of a fan.

At the left side next to the drum 22, so at the side of the supply conveyor 2, a clip 30 is fixed to the column 30, said clip supporting a plate 46 on which at the left side a shaft 47 is fixed and at the right side two shafts 48. On the shaft 47 a reel 49 is rotatably mounted, on which reel a roll 50 of binding material 51 is wound. This binding material 51 may, as already remarked above, consist of paper, textile, synthetic material or another material.

On the shafts 48 on the plate 46 two rotatable guide rollers 52 are mounted, said rollers 52 having as a purpose to guide the binding 51 to the drum 22.

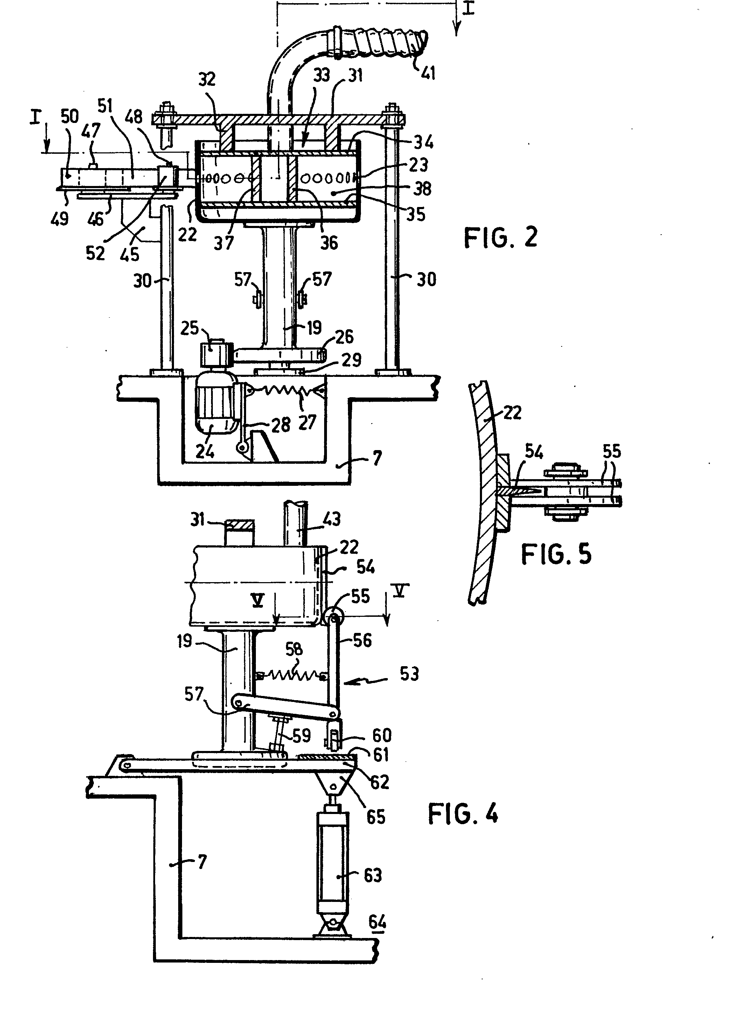

The apparatus according to the invention is provided with a cutting device 53 at the exterior of the drum 22, substantially diametrically opposite the cheese 1 on the turntable. The cutting device 53 is provided with a vertically upright knife 54, which is mounted on the cylindrical outer wall of the drum 22, and with a set of pushing rolls 55, which are mounted at the upper end of a push bar 56, which is connected to the drive shaft 19 of the drum 22 by means of a hinge bar 57 and a tension spring 58. There-with the hinge bar 57 is constructed as a double bar, as appears from fig. 2, and connected hingedly both to the drive shaft 19 and the push bar 56. The lowermost position of the push bar 56 is determined by means of an adjustable stop 59, which is also mounted on the drive shaft 19 of the drum 22.

At the lower side of the push bar 56 a runner roller 60 is mounted, which is adapted to cooperate with a plate-like pushing segment 61, which is hingedly mounted on the frame 7 by means of two hinge bars 62. The pushing segment 61 is operable by means of a hydraulic or pneumatic cylinder 63, which is hingedly mounted on the frame 7. The piston rod of the cylinder 63 is hingedly connected to a clip 65, which is secured to the pushing segment 61.

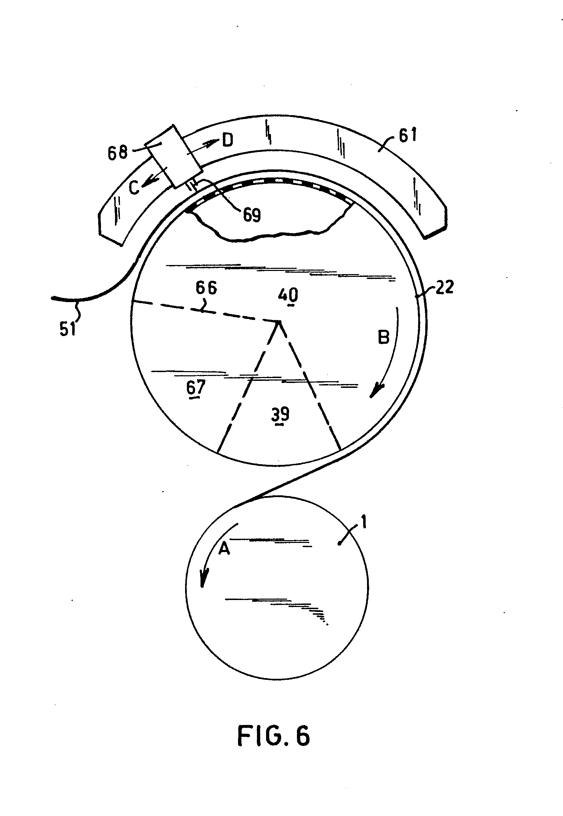

As indicated schematically in fig. 6 in the cylindrical space 38 in the stator 33, a third chamber 67 may be formed by means of a third partition 66, which chamber communicates with the atmosphere, and which in the direction of rotation B of the drum is disposed behind the overpressure chamber 39. Owing to said neutral chamber or sector 67 in the cylindrical space 38 it is achieved that the overpressure in the overpressure chamber 39 cannot be partially nullified by the vacuum chamber 40, directly following the overpressure chamber without neutral chamber, whereas the binding 51, after it is blown off from the drum 22, can no longer come under the influence of the underpressure of the vacuum chamber 40.

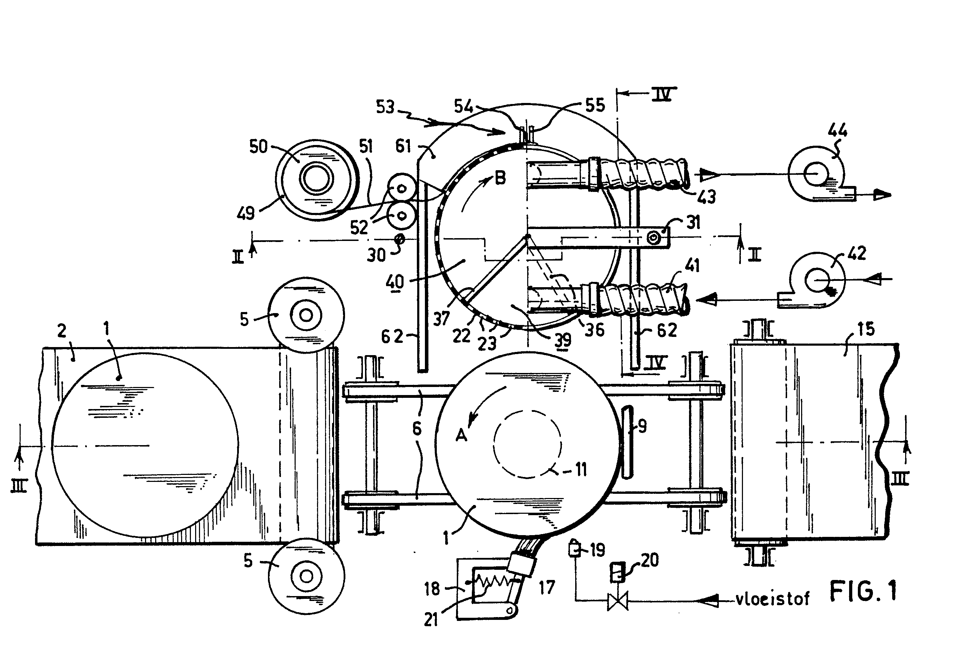

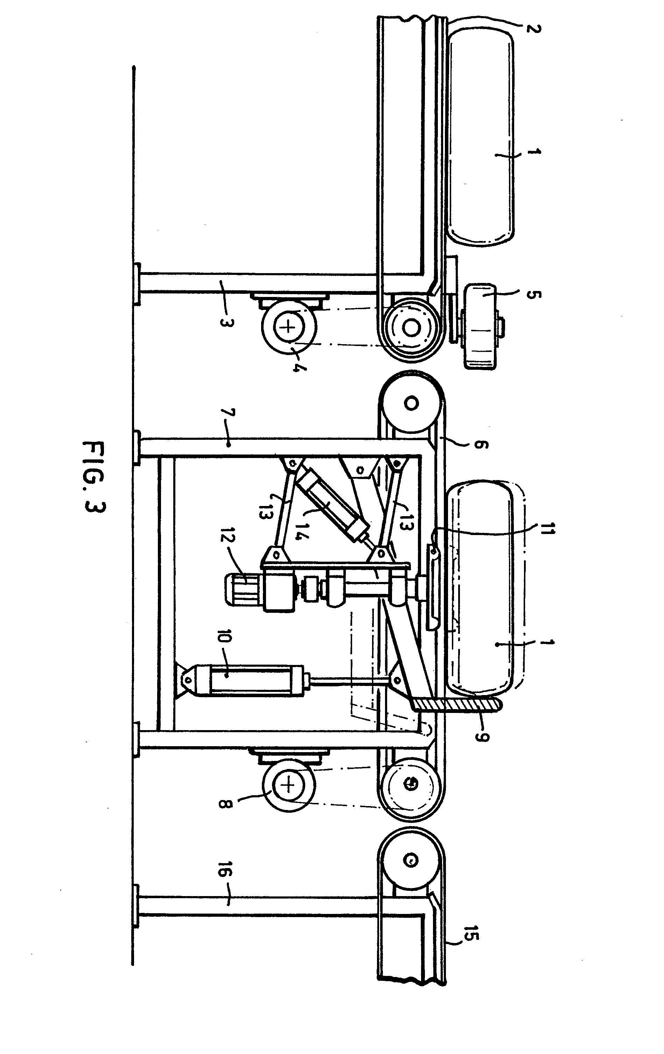

Although the third chamber 67 is only drawn in the embodiment according to fig. 6 of the apparatus according to the invention, it goes without saying that said third chamber 67 can also be applied in the apparatus according to fig. 1 thru 5.

The embodiment of the apparatus according to the invention, illustrated in fig. 6, is intended for applying a binding 51 around a cheese, the diameter of which may be considerably less than that of the drum 22. In the embodiment according to fig. 6 the cutting device 68 is fixedly connected to the segment 61, which may be constructed and driven in the same way as described for the apparatus according to figures 1 thru 5. In said embodiment the knife 69 is rotatably mounted on a transverse shaft, which is fixedly connected to the cutting device 68. The apparatus according to fig. 6 may, however, be constructed so, that the sheet-like segment 61 is fixedly mounted, and that the cutting device 68 is mounted upward and downwardly movably on the segment 61. The cutting device 68 is anyway adjustably mounted in transverse direction along an arc on the segment 61, as indicated by arrows C and D, so as to be able to adjust the length of the binding to the peripheral length of the cheese.

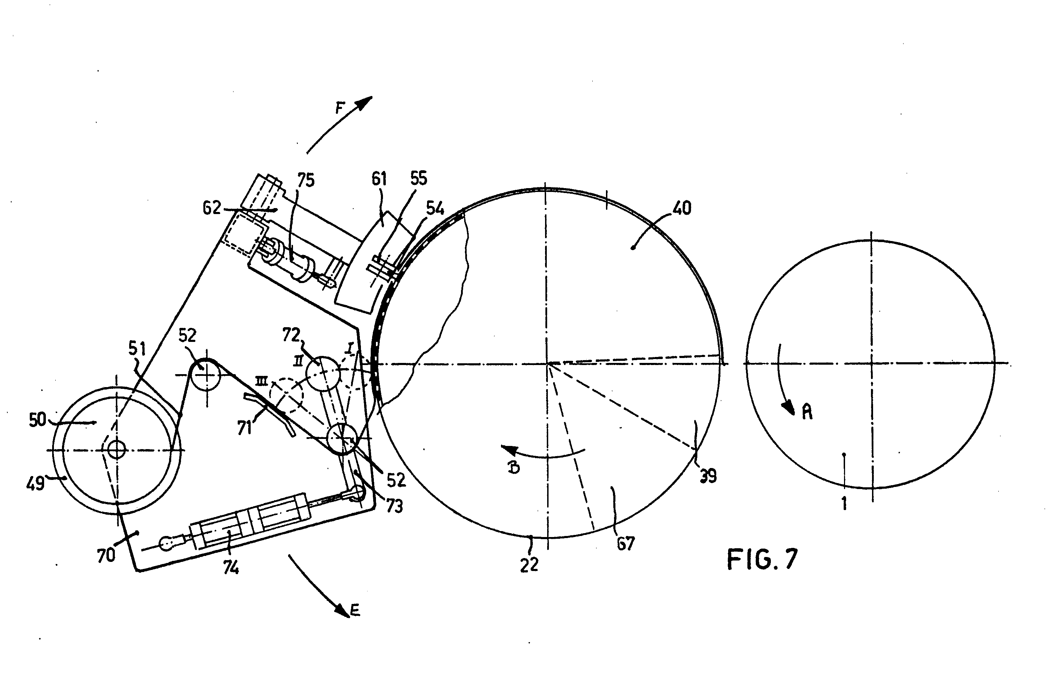

With the embodiment according to fig. 7 the cutting device is constructed and driven in the same way as with the apparatus according to fig. 1 thru 5. In said embodiment the reel (49), the coil (50), the guide rolls (52) are mounted on a base plate (70). The base plate (70) is adjustable along the periphery of the drum (22), as indicated with arrows E and F. On the base plate (70) furthermore a clamping plate (71) and a pushing roll (72) are provided. The pushing roll (72) can be placed in three positions with the aid of lever (73) and the three-position air cylinder (74). The three positions are indicated in fig. 7 by I, II and III. I is the position in which the binding (51) is pushed against the drum (22) by the pushing roll. II is the neutral position. III is the position in which the binding (51) is fixedly pushed against the clamping plate (71). The pushing segment (16) is hingedly mounted on base plate (70) by means of hinge bar (62). By means of the air cylinder (75) the pushing segment can be moved up and down.

The knives 54 and 69 respectively, used in the cutting devices 53 and 68, need not have the illustrated and described embodiment, but could for instance also be in the configuration of a glow filament which is most favourable when severing a gauze-like binding.

Furthermore it is also possible to use pre-perforated binding, so that the cutting device can be left out. By stopping the supply of binding at the correct moment, while the rotational movement of the cheese is continued, the binding is then separated on the perforation.

The operation of the apparatus according to the invention will now be elucidated further.

The starting position of the drum 22 is illustrated in fig. 1. When the fan 44 rotates, there prevails an underpressure in the chamber 40 of the cylindrical space 38 in the stator 33, so that at the location of the perforations 23 in the cylindrical drum wall 22 an inwardly sucking effect is developed. The free end of the binding 51 is drawn off the coil 50 on the reel 49, and passed between the guide rolls 52 and passed from the guide rolls 52 up to the knife 54 in clockwise direction over the perforated cylindrical peripheral wall of the drum 22 (vide fig. 1). By the underpressure which prevails in the chamber 40 the binding will remain pushed and fixed against the perforations because of the sucking effect.

The cheeses 1 are supplied while lying on the belt conveyor 2. Certain deviations in the position of the cheeses 1 relative to the middle of the supply conveyor 2 are corrected by the centering wheels 5. The cheese 1 is transferred from the supply conveyor 2 onto the V-belt conveyor 6, which conveys the cheese 1 up to the then upwardly folded stop 9, vide fig. 1. At this moment the conveyors 2 and 6 stop and by means of the cylinder 10 the stop 9 is folded downwardly away. Then the cylinder 14 becomes operative, so that the rotatable platform 11 moves upwardly and the cheese 1 comes to lie on the rotatable platform 11 and arrives just above the V-belt conveyor 6. The drive motor 12 of the rotatable platform 11 is started, so that the cheese 1 starts to rotate in anticlockwise direction according to arrow A. By means of the atomizer 19 water is atomized against the outer peripheral surface of the cheese 1 during a certain period of time. The brush 17 makes sure that the moist is well distributed over the surface of the cheese 1 to be wrapped. Then the driving motor 24 is started and the drum 22 rotates in opposite direction relative to the cheese 1 according to the arrow B and with a peripheral speed which is equal to or somewhat less than that of the cheese 1. During the rotation of the drum 22 the binding 51 is carried along with it as a consequence of the friction between the binding and the drum wall. The fan 41 now causes an overpressure in the chamber 39. As soon as the knife 54, which is fixedly secured on the drum wall 22, has passed the partition 36, the free end of the binding 51, as a consequence of the overpressure in the chamber 39, is blown away from the drum 22 and against the sticky outer peripheral surface of the cheese 1. While rotating, the drum 22 pulls the binding 51 from the coil 50 and is applied to the outer periphery of the cheese 1 according to the above described method. When the drum 22 has covered approximately 350 angle degrees from its starting position, the runner roll 60 of the cutting device (fig. 4) is present above the plate-like pushing segment 61 and the cutting movement is effected in that at this point the cylinder 63 causes the pushing segment 61 to perform an upward and downward movement. The binding 51, which was tensioned over the knife 54, is thus severed. After having rotated over about 360° the drum 22 stops. The cheese continues to rotate on the turntable 11 and pulls the remaining portion of the binding 51 from the drum 22. The brush 17 ensures that possible air inclusions between the binding 51 and the cheese 1 are forced out and that possible unevenesses in the binding-like wrap are smoothened. When the entire piece of binding 51 around the cheese has been covered by the brush 17, the driving motor 12 of the rotatable platform 11 stops, and the rotatable platform 11 is lowered into its starting position, shown in fig. 3, by means of the cylinder 14. The V-belt conveyor 6 is started and the cheese 1 is discharged to the discharge conveyor 15, which takes care of the further conveyance of the cheese. After the ready cheese has passed, the stop 9 is foled upwardly by means of the cylinder 10, after which the apparatus is ready to provide the next cheese 1 with a binding in the above described manner.

With the embodiment according to fig. 7 the operation is as follows:

The starting position of the drum (22) is illustrated in fig. 7, so with the cutting device (54, 55) above the pushing segment (61). Preliminarily the base plate (70) has been adjusted such that the length, measured along the periphery of the drum (22) in the direction of the arrow B, from the knife (54) up to the beginning of the overpressure chamber (39) is equal to the periphery of the cheese (1) to be wrapped. In this position the drum waits until the cheese (1), in the above described manner, has been made ready to receive the binding. In the meantime by means of the cylinder (75) the pushing segment is moved up and down once, so that the binding (51) is cut off by the cutting device (54, 55), after which the cycle may start again.

The part of the binding (51) which is still connected to the storage reel (49, 50), is retained by the push roll (72) which in the meantime has been brought into position III. Because of the underpressure in the chamber (40) the end of this part is still sucked against the drum (22), but is not taken along by the drum (22). The cut off portion does move along with the drum and is blown against the cheese (1) at the location of the overpressure chamber, and is further taken over by the cheese. At the moment the drum (22) has rotated so far, that the cutting device (54, 55) has covered a distance, equal to the length of the periphery of drum minus the length of the binding, the pushing roll (72) is released from the clamping plate (71) and placed in position I. Hereby the binding (51) is released and because of the vacuum and the additional pushing force of the push roll (72) it is taken along with the drum. After a certain period of time the push roll (72) is placed in the neutral position II, so that the knife (54) may pass freely. Finally the drum (22) with the knife (54) is stopped above the pushing segment (61). The binding is cut off and the pushing roll is brought into position III, after which the whole unit us ready for the next cycle again.

0063845

-1-

CLAIMS:

1. A method for applying a binding around the periphery of round flat cheeses from rolls of binding, characterized in that the unrolled binding is taken over from the supply roll by a perforated wall of a vacuum chamber, after which said binding is transferred onto an adjacent rotating cheese.

2. A method according to claim 1, characterized in that the binding after it has been under the influence of the vacuum chamber, comes under the influence of a neutral or overpressure chamber, after which the binding is transferred onto the periphery of an adjacent rotating cheese.

3. An apparatus for applying a binding around round flat cheeses, provided with a device to support and rotate the cheeses, and with a stock of binding material, characterized in that at the same level as the center of the cheese (1) on the support device (11) there is disposed a drivable drum (22), the wall of which is provided with openings (23), that with the aid of partitions two chambers (39, 40) are formed in the drum, one chamber (40) thereof being connected to a vacuum source (44) and the other chamber (39) being connected to an overpressure source (42), the overpressure chamber (39) being provided at the side of the cheese(1).

4. An apparatus according to claim 3, characterized in that in the drum a third chamber (67) is formed, which communicates with the atmosphere, and which is arranged behind the overpressure chamber (39) seen in the direction of rotation (B) of the drum (22).

5. An apparatus according to claim 3 or 4, characterized in that at the exterior of the drum (22) a vertically positioned cutting device (54) is mounted, and that in the vicinity of the drum a stock of binding material in the configuration of a coil (50) on a reel (49) is rotatably supported on a shaft (47).

6. An apparatus according to any of the preceding claims, characterized in that the diameter of the drum (22) is larger than the diameter of the cheese (1).

7. An apparatus according to claim 6, characterized in that in the vicinity of the drum (22) a separation device is mounted to severe the binding at the correct length.

8. An apparatus according to claim 7, characterized in that said separation device is displaceable along a section of the periphery.

9. An apparatus according to any of the preceding claims, characterized in that the apparatus is provided with a feed conveyor (2), and with a discharge conveyor (15) and that the device for the rotatable support of the cheeses is located between said conveyors.

10. An apparatus according to claim 9, characterized in that a spring mounted pushing device (17) is disposed at the periphery of the cheese at the side of the turntable (11) opposite the drum (22).

-3-

11. An apparatus according to any of the preceding claims, characterized in that by means of a liquid applicator (19, 20) liquid is applied to the cheese and/or the binding.

12. An apparatus according to any of the preceding claims, characterized in that the axes of the cheese (1) to be wrapped, and of the drum (22) are placed in another plane than the vertical plane.

tD/HH/LvdM

FIG.1

vloeistof

FIG. 2

FIG. 5

FIG. 4

0063845

FIG. 3

FIG. 6

0063845

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 873 018  (J.DONNAY)<br>*Column  1,  line  66 - column 3, line 13; figures* | 1 | B 65 B  11/04<br>B 65 B  25/06 //<br>B 65 C   9/28<br>B 65 C   5/00 |
| A | | 6,7 | |
| Y | GB-A-1 332 848  (VAUTIER)<br>*Page  2,  line 31 - page 3, line 47; figures* | 1 | |
| A | | 2,11 | |
| Y | US-A-3 356 063  (R.FIEVET)<br>*Column  3,  line  1 - column 10, line 60; figures 1,2,6,17,23,25* | 1 | |
| A | US-A-3 735 731  (G.TAVERNIER)<br>*Column 3, line 1 - line 52; column  5, line 16 - line 24; figure 1* | 1,11 | TECHNICAL FIELDS SEARCHED (Int. Cl. ³)<br><br>B 65 B<br>B 65 C |
| A | BE-A- 550 169  (BRONDEL)<br>*Page  3,  line  6 - page 4, line 23; figures* | 1,11 | |

The present search report has been drawn up for all claims

| Place of search | Date of completion of the search | Examiner |
|---|---|---|
| THE HAGUE | 27-07-1982 | JAGUSIAK A.H.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82